# EUROPEAN PATENT APPLICATION

(11) **EP 2 809 017 A1**
(43) Date of publication of application: **03.12.2014**
(21) Application number: 14168570.1
(22) Date of filing: 16.05.2014
(51) Int. Cl.: H04B 7/26, H04L 1/18, H04L 5/00

(54) **Method and apparatus for TTI (transmission time interval) bundling for small cell enhancements in a wireless communication system**

(30) Priority: 31.05.2013 US 201361829470 P
(71) Applicant: Innovative Sonic Corporation, Taipei City 10049 (TW)
(72) Inventor: Kuo, Richard Lee-Chee, 10049 Taipei City (TW)
(74) Representative: Hoefer & Partner

(57) **Abstract**

A method and apparatus are disclosed for TTI bundling for small cell enhancements in a wireless communication system. The method includes a UE (User Equipment) that is served by a first cell controlled by a first eNB (evolved Node B) (805). The method also includes the UE receives a first RRC (Radio Resource Control) message for configuring a TTI bundling (810). The method further includes the UE receives a second RRC message for adding a second cell controlled by a second eNB to the UE, wherein the second cell is configured with a PUSCH (Physical Uplink Shared Channel) (815). In addition, the method includes the UE applies the TTI bundling for uplink transmissions on the first cell and does not apply the TTI bundling for uplink transmissions on the second cell (820).

## Description

### CROSS-REFERENCE TO RELATED APPLICATIONS

The present Application claims the benefit of U.S. Provisional Patent Application Serial No. 61/829,470 filed on May 31, 2013, the entire disclosure of which is incorporated herein by reference.

### FIELD

This disclosure generally relates to wireless communication networks, and more particularly, to a method and apparatus for TTI bundling for small cell enhancements in a wireless communication system.

### BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard.

### SUMMARY

Methods and apparatus for TTI bundling for small cell enhancements in a wireless communication system according to the present invention are defined in independent claims 1, 7, 13, and 14, respectively. Preferred embodiments thereof are respectively defined in the respective dependent claims. The method according to a first aspect includes a UE (User Equipment) that is served by a first cell controlled by a first eNB (evolved Node B). This method also includes the UE receives a first RRC (Radio Resource Control) message for configuring a TTI bundling. This method further includes the UE receives a second RRC message for adding a second cell controlled by a second eNB to the UE, wherein the second cell is configured with a PUSCH (Physical Uplink Shared Channel). In addition, this method includes the UE applies the TTI bundling for uplink transmissions on the first cell and does not apply the TTI bundling for uplink transmissions on the second cell.

### BRIEF DESCRIPTION OF THE DRAWINGS

FIG. 1 shows a diagram of a wireless communication system according to one exemplary embodiment.
FIG. 2 is a block diagram of a transmitter system (also known as access network) and a receiver system (also known as user equipment or UE) according to one exemplary embodiment.
FIG. 3 is a functional block diagram of a communication system according to one exemplary embodiment.
FIG. 4 is a functional block diagram of the program code of FIG. 3 according to one exemplary embodiment.
FIG. 5 illustrates a prior art protocol architecture with PDCP (Packet Data Convergence Protocol) split according to one exemplary embodiment.
FIG. 6 illustrates a prior art protocol architecture with RLC (Radio Link Control) split according to one exemplary embodiment.
FIG. 7 illustrates a prior art protocol architecture with MAC (Medium Access Control) split according to one exemplary embodiment.
FIG. 8 illustrates a flow chart according to one exemplary embodiment.
FIG. 9 illustrates a flow chart according to one exemplary embodiment.

### DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3 GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including Document Nos. TS 36.321 V11.2.0, "E-UTRA MAC protocol specification (Release 11)"; TS 36.331 V11.3.0, "E-UTRA RRC protocol specification (Release 11)"; RP-122032, "Study on Small Cell enhancements for E-UTRA and E-UTRAN - Physical-layer aspects"; RP-122033, "Study on Small Cell enhancements for E-UTRA and E-UTRAN - Higher-layer aspects"; and R2-131831, "Discussion on bearer split options". The standards and documents listed above are hereby expressly incorporated herein.

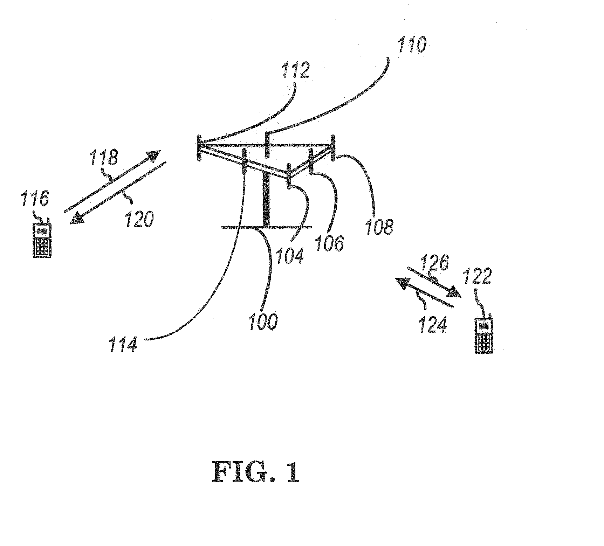

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an eNodeB, or some other terminology. An access terminal (AT) may also be called user equipment (UE), a wireless communication device, terminal, access terminal or some other terminology.

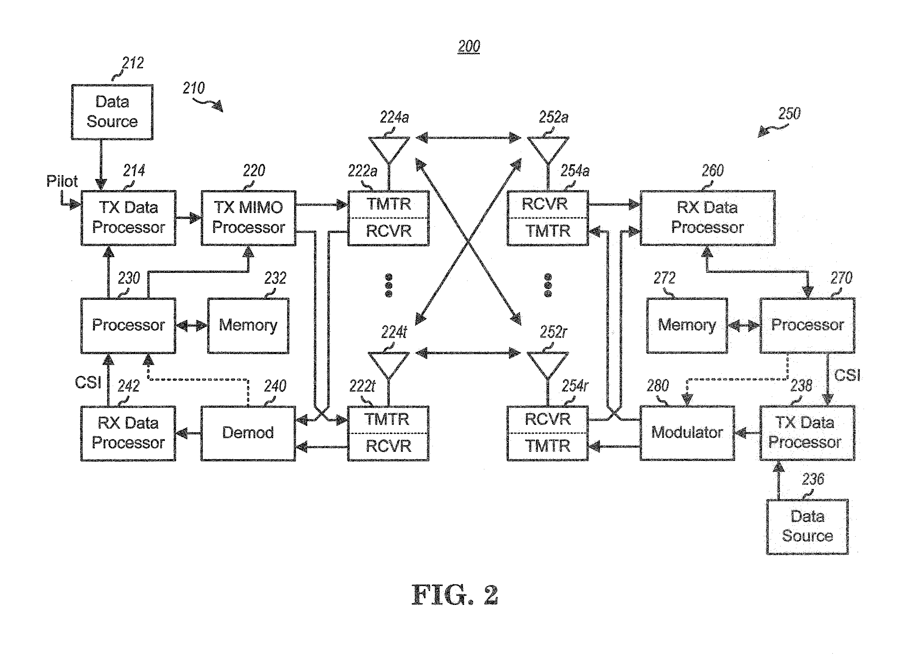

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides *N_{T}* modulation symbol streams to *N_{T}* transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *N_{T}* antennas 224a through 224t, respectively.

At receiver system 250, the transmitted modulated signals are received by *N_{R}* antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 23 8, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

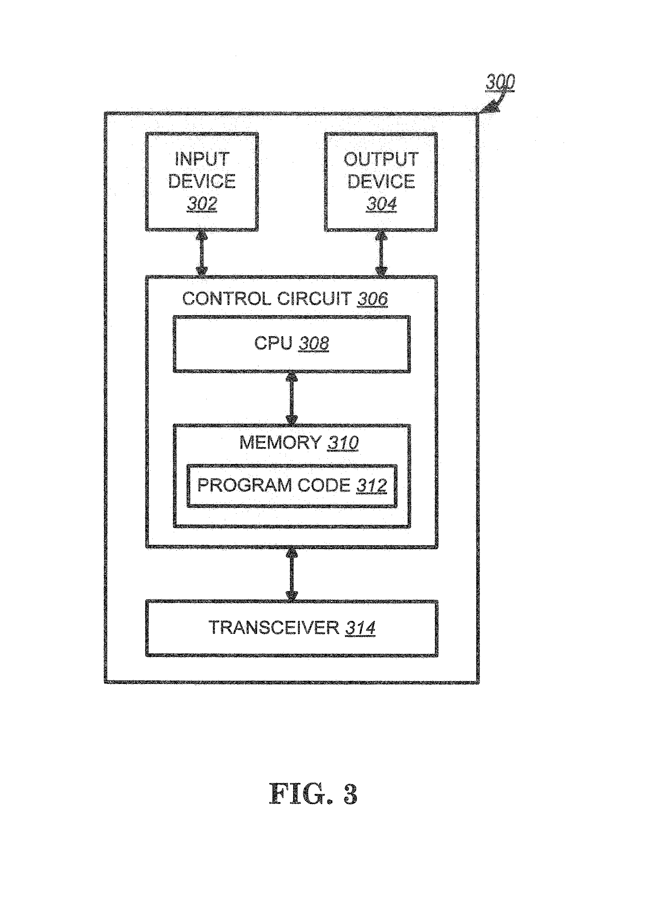

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly.

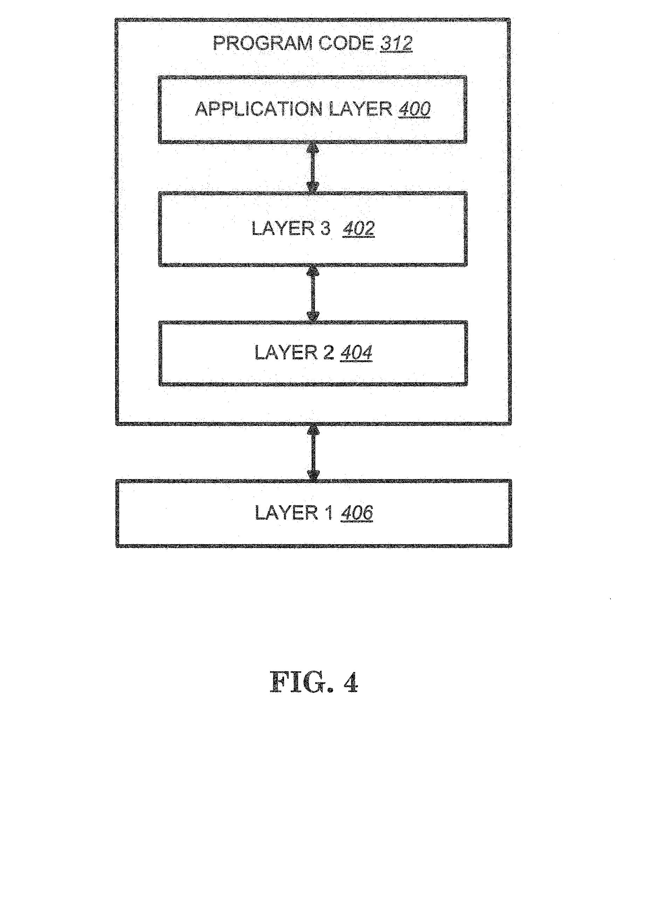

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

In general, Carrier Aggregation (CA) is a feature to support wider bandwidth in LTE-Advanced (LTE-A). A terminal may simultaneously receive or transmit on one or multiple component carriers depending on its capabilities.

In addition to a primary serving cell (PCell), a UE in RRC_CONNECTED mode may be configured with other secondary serving cells (SCell). The PCell is considered as always activated, while an Activation/Deactivation MAC control Element (CE) can be used to activate or deactivate an SCell (as discussed in 3GPP TS 36.321 V11.2.0). An *sCellDeactivationTimer* corresponding to the SCell may also be used for SCell status maintenance. For example, when the *sCellDeactivationTimer* expires, the corresponding SCell would be implicitly considered as deactivated. A configured SCell may contain downlink (DL) resources only (e.g., a DL CC) or DL resources as well as uplink (UL) resources (e.g., a DL Component Carrier (CC) and an UL CC) as discussed in 3GPP TS 36.331 V11.3.0.

Furthermore, 3GPP RP-122032 is generally a new study item for small cell enhancements on physical layer aspects for release-12. 3GPP RP-122032 describes the objective of the study item as follows:

### 4 Objective

The objective of this study is to identify potential enhancements to improve the spectrum efficiency as well as efficient small cell deployment and operation in order to meet the requirements targeted for small cell enhancements in the identified scenarios in TR36.932, and evaluate the corresponding gain, standardization impact and complexity.

The study shall focus on the following areas:
- Define the channel characteristics of the small cell deployments and the UE mobility scenarios identified in TR36.932, as well as the corresponding evaluation methodology and metrics.
- Study potential enhancements to improve the spectrum efficiency, i.e. achievable user throughput in typical coverage situations and with typical terminal configurations, for small cell deployments, including
   o Introduction of a higher order modulation scheme (e.g. 256 QAM) for the downlink.
   o Enhancements and overhead reduction for UE-specific reference signals and control signaling to better match the scheduling and feedback in time and/or frequency to the channel characteristics of small cells with low UE mobility, in downlink and uplink based on existing channels and signals.
- Study the mechanisms to ensure efficient operation of a small cell layer composed of small cell clusters. This includes
   ∘ Mechanisms for interference avoidance and coordination among small cells adapting to varying traffic and the need for enhanced interference measurements, focusing on multi-carrier deployments in the small cell layer and dynamic on/off switching of small cells.
   ∘ Mechanism for efficient discovery of small cells and their configuration.
- Physical layer study and evaluation for small cell enhancement higher-layer aspects, in particular concerning the benefits of mobility enhancements and dual connectivity to macro and small cell layers and for which scenarios such enhancements are feasible and beneficial.

The study should address small cell deployments on both a separate and the same frequency layer as the macro cells, taking into account existing mechanisms (e.g., CoMP, FeICIC) wherever applicable.

Coordinated and time synchronized operation of the small cell layer and between small cells and the macro layer can be assumed for specific operations and feasibility and benefits of radio-interface based synchronization mechanisms shall be addressed.

Backward compatibility, i.e. the possibility for legacy (pre-R12) UEs to access a small-cell node/carrier, shall be guaranteed (except for features studied for small-cells using NCT) and the ability for legacy (pre-Rel-12) UEs to benefit from small-cell enhancements can be considered, which shall be taken into account in the evaluation of the different proposed enhancements. The introduction of non-backwards compatible features should be justified by sufficient gains.

This study item shall consider the work of other related study/work item(s) in Rel-12.

In addition, 3GPP RP-122033 is a new study item for small cell enhancements on higher layer aspects for Release-12. 3GPP RP-122033 describes the objective ofthis study item as follows:

### 4 Objective

The objective of this study is to identify potential technologies in the protocol and architecture for enhanced support of small cell deployment and operation which should satisfy scenarios and requirements defined in TR 36.932.

The study shall be conducted on the following aspects:
- Identify and evaluate the benefits of UEs having dual connectivity to macro and small cell layers served by different or same carrier and for which scenarios such dual connectivity is feasible and beneficial.
- Identify and evaluate potential architecture and protocol enhancements for the scenarios in TR 36.932 and in particular for the feasible scenario of dual connectivity and minimize core network impacts if feasible, Including:
   ∘ Overall structure of control and user plane and their relation to each other, e.g., supporting C-plane and U-plane in different nodes, termination of different protocol layers, etc.
- Identify and evaluate the necessity of overall Radio Resource Management structure and mobility enhancements for small cell deployments:
   o Mobility mechanisms for minimizing inter-node UE context transfer and signalling towards the core network.
   o Measurement and cell identification enhancements while minimizing increased UE battery consumption.

For each potential enhancement, the gain, complexity and specification impact should be assessed.

The study shall focus on potential enhancements which are not covered by other SI/Wls.

Furthermore, 3GPP R2-131831 discusses the bearer split options for small cell enhancements. In particular, 3GPP R2-131831 analyzes the drawbacks for each bear split option and proposes to focus on no bearer split options at the first phase.

In general, TTI (Transmission Time Interval) bundling was introduced in Rel-8 to enhance uplink coverage for UEs near cell edge. As discussed in 3GPP TS 36.321 V112.0, TTI bundling is not supported when the UE is configured with one or more SCells with configured uplink, which implies simultaneous TTI bundling and SCells with configured downlink are supported. This constraint on TTI bundling usage was determined because people thought it was impossible for a UE near cell edge to maintain uplink performance of two parallel transmissions due to maximum UE power limitation.

If downlink traffic offloading to a small cell for a UE near the cell edge of a macro cell is to be supported, further consideration would be needed in addition to configuring a PUCCH (Physical Downlink Control Channel) on the small cell at least for HARQ (Hybrid Automatic Repeat Request) feedback to downlink transmissions.

Assuming that a UE is near the cell edge of a macro cell and TTI bundling is configured to this UE for uplink coverage enhancement, if the UE enters coverage of a small cell, the macro eNB may decide to add the small cell to the UE for downlink traffic offloading. As such, the downlink traffic of a service (e.g., a streaming service) in the UE would then be transmitted via the small cell.

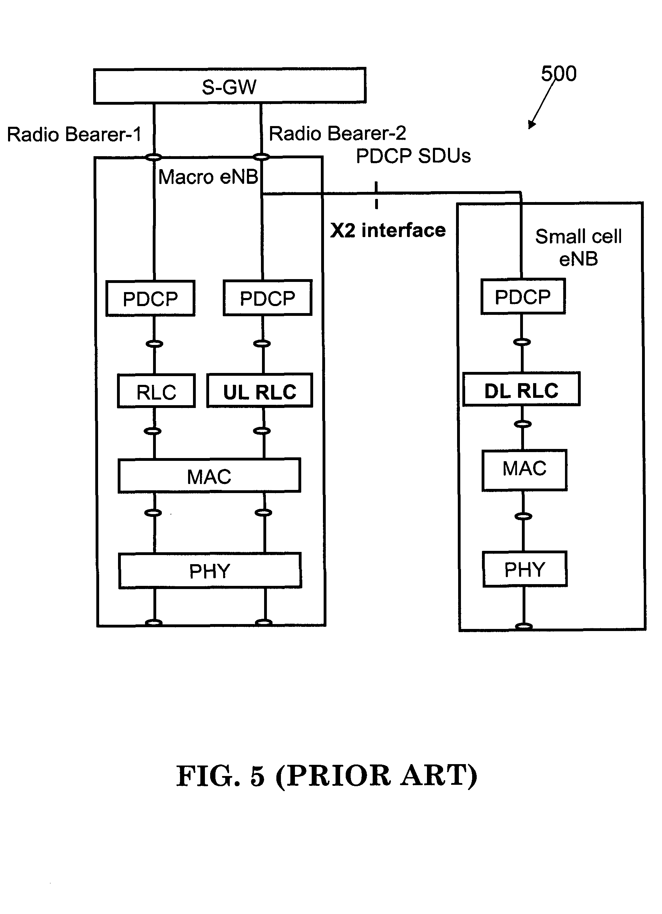

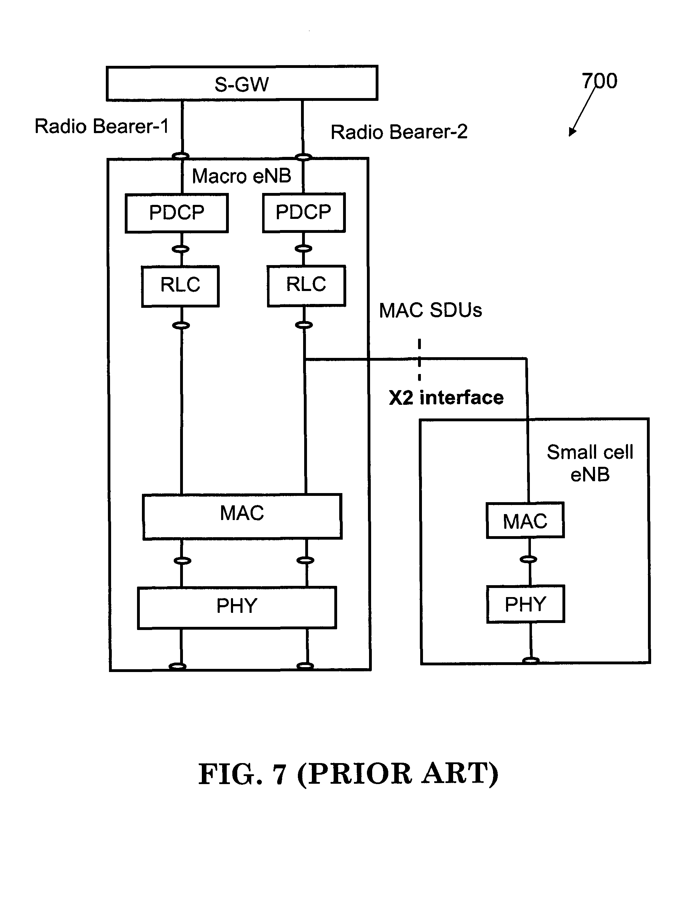

In addition to downlink data, a streaming service basically would also contain uplink control information of the application layer. Thus, if uplink transmissions via the small cell are not allowed when TTI bundling is configured to the UE, a RB (Radio Bearer) for supporting the streaming service would need to split in uplink and downlink (such as uplink transmissions via the macro cell and downlink transmissions via the small cell). Depending on the split point, there are 3 kinds of protocol architectures for forwarding data forwarding from the macro eNB to the small cell eNB over X2 interface as shown in FIGS. 5, 6, and 7.

Since PDCP (Packet Data Convergence Protocol) is generally in charge of security function, the PDCP split shown in FIG. 5 requires the small cell eNB to maintain the security context. This is a concern because the protection of the small cell facility is much weaker than that of the macro cell facility. In addition, RLC (Radio Link Control) Status to be sent to the UE for UL PDUs (Packet Data Unit) and RLC Status received from the UE for DL PDUs need to be forwarded from UL RLC entity via X2-interface to the DL RLC entity. This would induce extra complexity in network implementation.

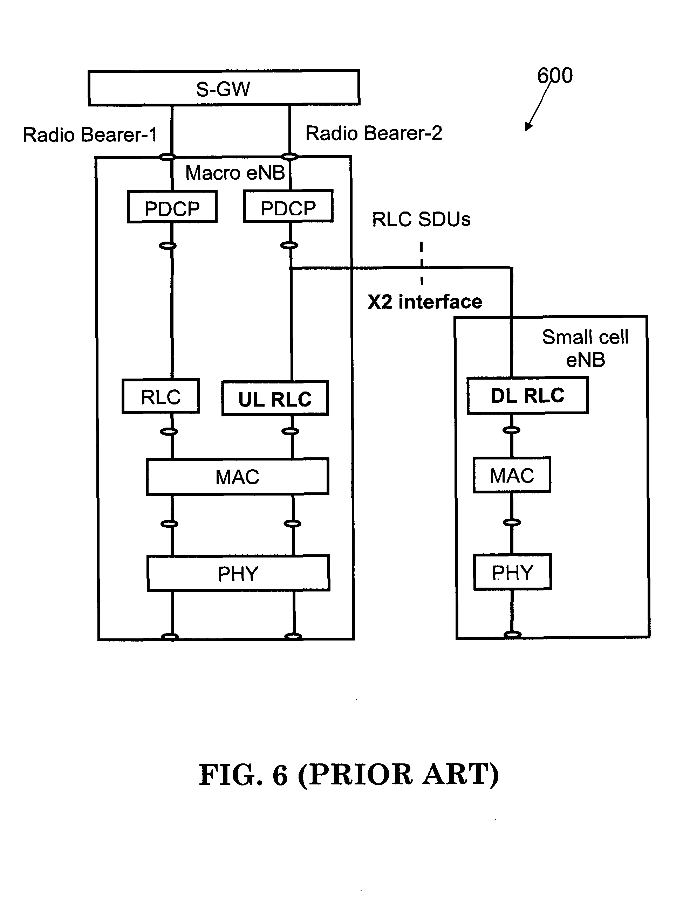

Also, RLC Status forwarding is required in FIG. 6 (RLC split), while FIG. 3 (MAC split) is not feasible because it does not support RLC re-segmentation for DL RLC PDU due to non-ideal backhaul. For S1 approach (in which DL data from the S-GW directly to the small cell eNB over S1 interface), the situations and issues per protocol architectures are similar.

In view of the above, it would be easier to implement protocol architecture if UL transmissions via the small cell could be supported when TTI bundling is configured. Since the uplink power to the small cell should be low because of short distance, it may be feasible for the UE to maintain uplink performance of two parallel transmissions. In this situation, there would be no need for the UE to apply TTI bundling on the small cell. In general, the idea is that the UE applies TTI bundling for uplink transmissons on the macro cell and does not apply TTI bundling for uplink transmissions on the small cell. In one embodiment, the small cell could be configured with a PUSCH. In another embodiment, the small cell could be configured with a PUCCH. In various embodiments, TTI bundling would not applicable for transmission of a Msg3.

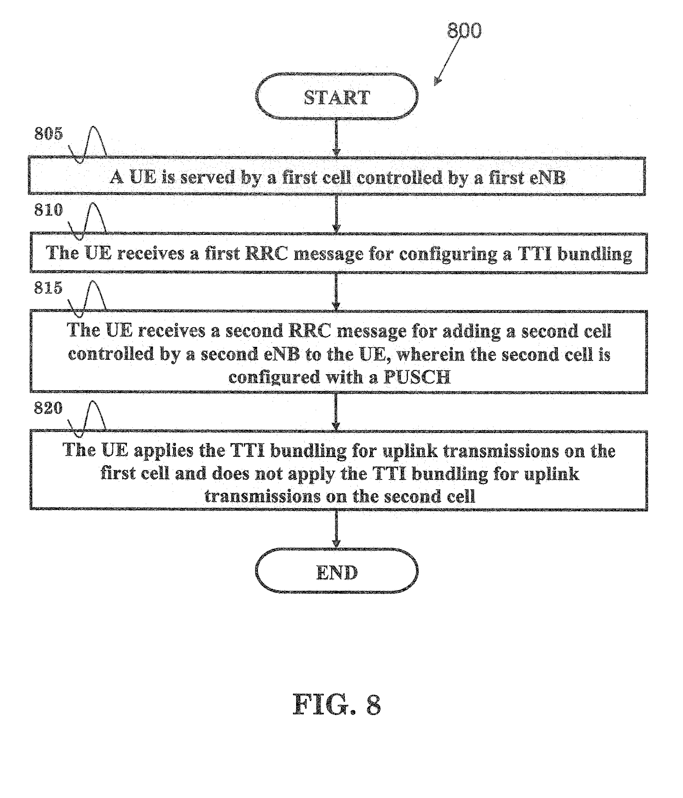

FIG. 8 is a flow chart 800 from the perspective of the UE in accordance with one exemplary embodiment. In step 805, a UE (User Equipment) is served by a first cell controlled by a first eNB (evolved Node B). In step 810, the UE receives a first RRC (Radio Resource Control) message for configuring a TTI bundling. In step 815, the UE receives a second RRC message for adding a second cell controlled by a second eNB to the UE, wherein the second cell is configured with a PUSCH (Physical Uplink Shared Channel). In step 820, the UE applies the TTI bundling for uplink transmissions on the first cell and does not apply the TTI bundling for uplink transmissions on the second cell.

In one preferred embodiment thereof, a single transport block is coded and transmitted in a plurality of consecutive TTIs within the TTI bundling. Furthermore, there are 4 consecutive TTIs within the TTI bundling. In addition, the TTI bundling is not applicable for transmission of an Msg3, and the Msg3 is a message transmitted on UL-SCH (Uplink Shared Channel) containing a C-RNTI (Cell Radio Network Temporary Identifier) MAC (Medium Access Control) control element or a CCCH (Common Control Channel) SDU (Service Data Unit) submitted from upper layer as part of a random access (RA) procedure.

In one further preferred embodiment thereof, which might be combined with the above preferred embodiment thereof, the second cell is configured with a PUCCH (Physical Uplink Control Channel). In addition, the second RRC message includes information to indicate at least one radio bearer (RB) allocated to the second cell. Furthermore, the UE could receive the first RRC message earlier or later than the second RRC message. Also, the first cell could be a primary serving cell (PCell) and the second cell could be a secondary serving cell (SCell).

In one still further preferred embodiment thereof, which might be combined with the above preferred embodiment thereof and/or the above further preferred embodiment thereof, the first and/or second RRC message could be an RRC Reconfiguration message, as specified in 3GPP TS 36.331 V11.3.0.

Referring back to FIGs. 3 and 4, in one embodiment, the device 300 could include a program code 312 stored in memory 310 for small cell enhancements in a wireless communication system wherein a UE is served by a first cell controlled by a first eNB. The CPU 308 could execute the program code 312 to enable the UE (i) to receive a first RRC message for configuring a TTI bundling, and (ii) to receive a second RRC message for adding a second cell controlled by a second eNB to the UE, wherein the second cell is configured with a PUSCH, and the UE applies the TTI bundling for uplink transmissions on the first cell and does not apply the TTI bundling for uplink transmissions on the second cell. In addition, the CPU 308 could execute the program code 312 to perform all of the above-described actions and steps or others described herein, in particular those described in paragraphs [0045] to [0048].

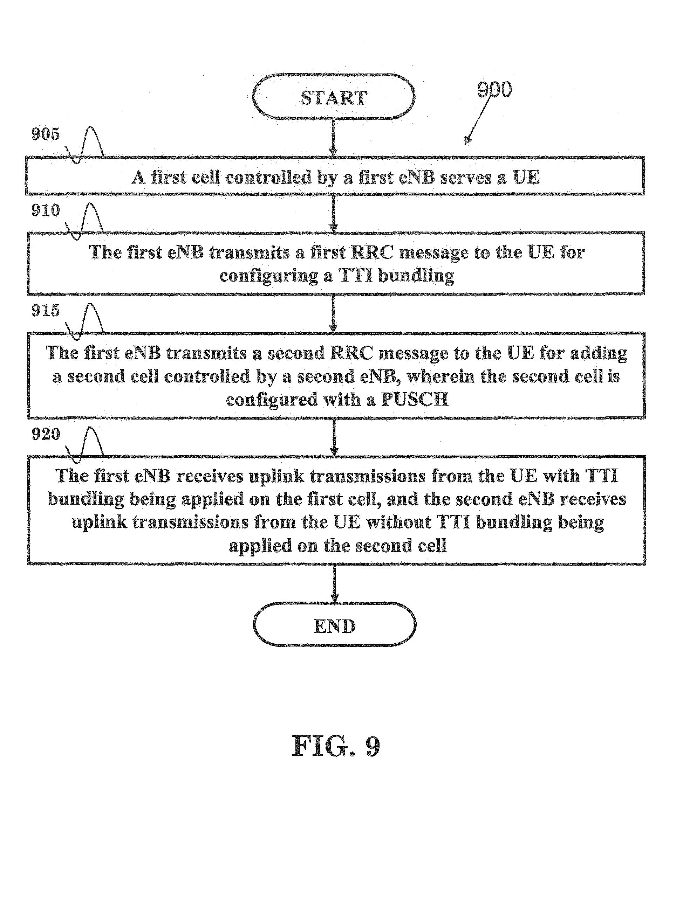

FIG. 9 is a flow chart 900 from the perspective of an eNB in accordance with one further exemplary embodiment. In step 905, a first cell controlled by a first eNB (evolved Node B) serves a UE (User Equipment). In step 910, the first eNB transmits a first RRC (Radio Resource Control) message to the UE for configuring a TTI bundling. In step 915, the first eNB transmits a second RRC message to the UE for adding a second cell controlled by a second eNB, wherein the second cell is configured with a PUSCH (Physical Uplink Shared Channel). In step 920, the first eNB receives uplink transmissions from the UE with TTI bundling being applied on the first cell, and the second eNB receives uplink transmissions from the UE without TTI bundling being applied on the second cell.

In one preferred embodiment thereof, a single transport block is coded and transmitted in a plurality of consecutive TTIs within the TTI bundling. Furthermore, there are 4 consecutive TTIs within the TTI bundling. In addition, the TTI bundling is not applicable for transmission of an Msg3, and the Msg3 is a message transmitted on UL-SCH containing a C-RNTI MAC control element or a CCCH (Common Control Channel) SDU (Service Data Unit) submitted from upper layer as part of a random access (RA) procedure.

In one further preferred embodiment thereof, which might be combined with the above preferred embodiment thereof, the second cell is configured with a PUCCH (Physical Uplink Control Channel). In addition, the second RRC message includes information to indicate at least one radio bearer (RB) allocated to the second cell. Furthermore, the first RRC message could be transmitted earlier or later than the second RRC message. Also, the first cell could be a primary serving cell (PCell) and the second cell could be a secondary serving cell (SCell).

In one still further preferred embodiment thereof, which might be combined with the above preferred embodiment thereof and/or the above further preferred embodiment thereof, the first and/or second RRC message could be an RRC Reconfiguration message, as specified in 3GPPTS 36.331 V11.3.0.

Referring back to FIGs. 3 and 4, in one embodiment, the device 300 could include a program code 312 stored in memory 310 for TTI bundling in a wireless communication system wherein a first cell controlled by a first eNB serves a UE. The CPU 308 could execute the program code 312 to enable the first eNB (i) to transmit a first RRC message to the UE for configuring a TTI bundling, and (ii) to transmit a second RRC message to the UE for adding a second cell controlled by a second eNB, wherein the second cell is configured with a PUSCH, and the first eNB receives uplink transmissions from the UE with TTI bundling being applied on the first cell, and the second eNB receives uplink transmissions from the UE without TTI bundling being applied on the second cell. In addition, the CPU 308 could execute the program code 312 to perform all of the above-described actions and steps or others described herein, in particular those described in paragraphs [0050] to [0053].

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method for Transmission Time Interval, in the folodving also referred to as TTI, bundling in a wireless communication system, comprising:
a User Equipment, in the following also referred to as UE, is served by a first cell controlled by a first evolved Node B, in the following also referred to as eNB, (805);
the UE receives a first Radio Resource Control, in the following also referred to as RRC, message for configuring a TTI bundling (810); and
the UE receives a second RRC message for adding a second cell controlled by a second eNB to the UE, wherein the second cell is configured with a Physical Uplink Shared Channel, in the following also referred to as PUSCH, (815); and
the UE applies the TTI bundling for uplink transmissions on the first cell and does not apply the TTI bundling for uplink transmissions on the second cell (820).

2. The method of claim 1, wherein a single transport block is coded and transmitted in a plurality of consecutive TTIs within the TTI bundling, and wherein preferably there are 4 consecutive TTIs within the TTI bundling.

3. The method of claim 1 or 2, wherein the second cell is configured with a Physical Uplink Control Channel, in the following also referred to as PUCCH.

4. The method of anyone of claims 1 to 3, wherein the second RRC message includes information to indicate at least one radio bearer, in the following also referred to as RB, allocated to the second cell.

5. The method of anyone of claims 1 to 4, wherein the UE receives the first RRC message earlier or later than the second RRC message.

6. The method of anyone of claims 1 to 5, wherein the first cell is a primary serving cell, in the following also referred to as PCell, and the second cell is a secondary serving cell, in the following also referred to as SCell.

7. A method for Transmission Time Interval, in the following also referred to as TTI, bundling in a wireless communication system, comprising:
a first cell controlled by a first evolved Node B, in the following also referred to as eNB, serves a User Equipment, in the following also referred to as UE, (905);
the first eNB transmits a first Radio Resource Control, in the following also referred to as RRC, message to the UE for configuring a TTI bundling (910); and
the first eNB transmits a second RRC message to the UE for adding a second cell controlled by a second eNB, wherein the second cell is configured with a Physical Uplink Shared Channel, in the following also referred to as PUSCH, (915); and
the first eNB receives uplink transmissions from the UE with TTI bundling being applied on the first cell, and the second eNB receives uplink transmissions from the UE without TTI bundling being applied on the second cell (920).

8. The method of claim 7, wherein a single transport block is coded and transmitted in a plurality of consecutive TTIs within the TTI bundling, and wherein preferably there are 4 consecutive TTIs within the TTI bundling.

9. The method of claim 7 or 8, wherein the second cell is configured with a Physical Uplink Control Channel, in the following also referred to as PUCCH.

10. The method of anyone of claims 7 to 9, wherein the second RRC message includes information to indicate at least one radio bearer, in the following also referred to as RB, allocated to the second cell.

11. The method of anyone of claims 7 to 10, wherein the first RRC message is transmitted earlier or later than the second RRC message.

12. The method of anyone of claims 7 to 11, wherein the first cell is a primary serving cell, in the following also referred to as PCell, and the second cell is a secondary serving cell, in the following also referred to as SCell.

13. A communication device (300) for Transmission Time Interval, in the following also referred to as TTI, bundling in a wireless communication system wherein a User Equipment, in the following also referred to as UE, is served by a first cell controlled by a first evolved Node B, in the following also referred to as eNB, the communication device comprising:
a control circuit (306);
a processor (308) installed in the control circuit (306);
a memory (310) installed in the control circuit (306) and operatively coupled to the processor (308);
wherein the processor (308) is configured to execute a program code (312) stored in the memory (310) to facilitate TTI bundling to enable the UE to perform the method steps as defined in anyone of the preceding claims 1 to 6.

14. A communication device (300) for Transmission Time Interval, in the following also referred to as TTI, bundling in a wireless communication system wherein a User Equipment, in the following also referred to as UE, is served by a first cell controlled by a first evolved Node B, in the following also referred to as eNB, the communication device (300) comprising:
a control circuit (306);
a processor (308) installed in the control circuit (306);
a memory (310) installed in the control circuit (306) and operatively coupled to the processor (308);
wherein the processor (308) is configured to execute a program code (312) stored in the memory (310) to facilitate TTI bundling to enable the first eNB to perform the method steps as defined in anyone of the preceding claims 7 to 12.
